# EUROPÄISCHE PATENTSCHRIFT

(11) **EP 1 146 353 B1**
(45) Veröffentlichungstag und Bekanntmachung des Hinweises auf die Patenterteilung: **02.03.2005**
(21) Anmeldenummer: 01107072.9
(22) Anmeldetag: 21.03.2001
(51) Int. Cl.: G01V 8/10, G01V 3/20, G01V 8/20

(54) **Optoelektronische Sensoranordnung sowie Verfahren zum Betreiben einer optoelektronischen Sensoranordnung**
Optoelectronic sensor device and method of operating an optoelectronic sensor device
Dispositif détecteur optoélectronique et méthode pour actionner un dispositif détecteur optoélectronique

(30) Priorität: 13.04.2000 DE 10018366
(43) Veröffentlichungstag der Anmeldung: 17.10.2001
(73) Patentinhaber: Sick AG, 79183 Waldkirch, Breisgau (DE)
(72) Erfinder: Wüstefeld, Martin, 79350 Sexau (DE); Blöhbaum, Frank, 79112 Freiburg (DE)
(74) Vertreter: Manitz, Finsterwald & Partner GbR

(56) Entgegenhaltungen:
- DE-A- 4 305 559
- DE-A- 19 544 632
- US-A- 4 559 452

## Beschreibung

Die vorliegende Erfindung betrifft ein Verfahren zum Betreiben einer optoelektronischen Sensoranordnung sowie eine solche Sensoranordnung.

Mit derartigen Sensoranordnungen wird beispielsweise das unzulässige Eindringen von Objekten in einen Überwachungsbereich oder das Vorhandensein eines zulässigen Objektes im Überwachungsbereich erkannt. Als Sensorsysteme werden oftmals herkömmliche Kamerasysteme mit CCD-basierten Lösungen verwendet. Diese sind jedoch im industriellen Umfeld insbesondere wegen ihrer hohen Fremdlichtempfindlichkeit und ihrer begrenzten Reichweite nur bedingt einsetzbar.

Um die geforderte hohe Reichweite zu ermöglichen, sind Sensoren mit hoher Empfindlichkeit erforderlich. Kommerziell erhältlich sind hier insbesondere Sensoren mit sogenanntem "Rolling Shutter" die meist eine Vielzahl von matrixförmig angeordneten lichtempfindlichen Elementen umfassen. Unter "Rolling Shutter" versteht man dabei die Funktionalität, daß jeweils eine gewisse Anzahl von in nebeneinanderliegenden Zeilen oder Spalten angeordneten lichtempfindlichen Elementen gleichzeitig zum Empfang von Licht aktivierbar sind, wodurch eine "Blende" gebildet wird, die zeilen- oder spaltenweise über die gesamte Fläche des Sensors läuft.

Nachteilig an der Verwendung von Sensoren mit Rolling Shutter ist, daß durch diese die Fremdlichttoleranz einer optoelektronischen Sensoranordnung erheblich reduziert wird, da die Integrationszeit des Fremdlichtes mehrfach größer ist als die des Nutzsignals

Die US 4,559,452 betrifft eine Vorrichtung zur Detektion der Position zumindest einer Kante eines Geldscheins, um aufgrund der detektierten Breite zwischen verschiedenen Arten von Geldscheinen unterscheiden zu können. Die Vorrichtung umfasst hierzu jeweils eine Vielzahl von in einer Reihe angeordneten lichtemittierenden Dioden und Fotosensoren, die jeweils paarweise einander gegenüberliegen. Die Detektion der Position der Kante des Geldscheins wird durch Unterbrechen von Lichtwegen zwischen den Dioden und den jeweils zugeordneten Fotosensoren durch den Geldschein erreicht.

Die DE 43 05 559 A1 beschreibt eine Anordnung und ein Verfahren zur Konturerkennung von auf einem Förderband an einer optischen Abtasteinrichtung vorbeibewegten Flaschen. Die Abtasteinrichtung weist eine Gruppe von in unterschiedlicher Höhe über dem Förderband angeordneten, quer zur Förderrichtung ausgerichteten Lichtschranken auf, die mit einer von der Fördergeschwindigkeit abhängigen Wiederholfrequenz in mehreren Abtastzyklen abgetastet werden. Die Ausgangssignale der einzelnen Lichtsignale werden zur Konturerkennung mit Referenzwerten verglichen.

Es ist eine Aufgabe der vorliegenden Erfindung eine optoelektronische Sensoranordnung sowie ein Verfahren zum Betreiben einer solchen Sensoranordnung anzugeben, die auch bei der Verwendung eines Sensors mit Rolling Shutter eine geringe Fremdlichtempfindlichkeit besitzt.

Erfindungsgemäß wird die das Verfahren betreffende Aufgabe durch ein Verfahren gemäß Anspruch 1 gelöst.

Der die Vorrichtung betreffende Teil der Aufgabe wird gelöst durch eine optoelektronische Sensoranordnung gemäß Anspruch 11.

Erfindungsgemäß werden somit nicht alle lichtempfindlichen Elemente der Sensoreinheit gleichzeitig aktiviert, sondern es erfolgt jeweils nur eine Aktivierung einer Teilmenge der lichtempfindlichen Elemente während jeweils aufeinanderfolgender Aktivierungsintervalle. Dabei erfolgt eine Synchronisierung des Aussendens der Lichtsignale mit der Aktivierung der Teilmenge der lichtempfindlichen Elemente, auf die im Normalbetriebsfall die Lichtpunkte abgebildet werden. Dadurch ist gewährleistet, daß die in diesem "Soll-Aktivierungsintervall" erfaßten Lichtpunkte auch tatsächlich auf aktivierte lichtempfindliche Elemente treffen und somit von der ortsauflösenden Sensoreinheit erfaßt werden können. Gleichzeitig wird die Menge des integrierten Fremdlichtes ebenfalls auf das Soll-Aktivierungsintervall reduziert, da für die Signalverarbeitung der erfaßten Lichtsignale nur die Ausgangssignale der während des Soll-Aktivierungsintervalls aktivierten lichtempfindlichen Elemente ausgewertet werden.

Somit kann mit dem erfindungsgemäßen Verfahren insbesondere auch bei Verwendung eines Sensors mit Rolling Shutter die Fremdlichtempfindlichkeit deutlich reduziert werden.

Nach einer vorteilhaften Ausführungsform der Erfindung wird die Position des erzeugten Bildes auf der Sensoreinheit mit einer vorgegebenen Referenzposition des Referenzbildes verglichen. Bei einer Abweichung der ermittelten Position des erzeugten Bildes von der Referenzposition um einen vorgegebenen Toleranzwert wird auf diese Weise ein Störwert erkannt, auch wenn sich die Form des erzeugten Bildes von der Form des Refenzbildes nicht wesentlich unterscheidet. Grundsätzlich kann sowohl die Form und/oder die Position des Bildes mit der Form und/oder der Position des Referenzbildes verglichen werden.

Bevorzugt werden die Positionen der erfaßten Lichtpunkte auf der Sensoreinheit mit vorgegebenen Referenzpositionen verglichen. Durch den Vergleich der Positionen der einzelnen Lichtpunkte wird sowohl eine Änderung in der Form als auch in der Position des auf der Sensoreinheit erzeugten Bildes gegenüber dem Referenzbild erkannt.

Die Form und/oder die Referenzposition des Referenzbildes werden vorteilhaft in einem Lernverfahren eingelernt, so daß nach dem Einlernvorgang die Teilmenge der lichtempfindlichen Elemente bestimmt werden kann, welche während des Soll-Aktivierungsintervalls aktiviert werden.

Vorteilhaft werden die Lichtsignale synchron mit dem Aktivierungsintervall ausgesandt, in dem die mit den Referenzpositionen des Referenzbildes oder der Lichtpunkte korrespondierenden lichtempfindlichen Elemente der Sensoreinheit aktiviert werden. Dieses Aktivierungsintervall wird in dieser Anmeldung mit dem Begriff Soll-Aktivierungsintervall bezeichnet.

Außerhalb des Soll-Aktivierungsintervalls werden bevorzugt keine Lichtsignale in den Überwachungsbereich ausgesandt und es werden nur die innerhalb des Soll-Aktivierungsintervalls von den lichtempfindlichen Elementen erfaßten Signale ausgewertet.

Nach einer weiteren bevorzugten Ausführungsform der Erfindung werden in aufeinanderfolgenden Aktivierungsintervallen nacheinander alle Teilmengen der lichtempfindlichen Elemente aktiviert, bis letztlich alle lichtempfindlichen Elemente der Sensoreinheit aktiviert worden sind. Diese Vorgehensweise wird erfindungsgemäß bei der Verwendung einer Sensoreinheit mit Rolling Shutter gewählt. Die durch den Rolling Shutter definierte "Blende" die sich durch die Aktivierung jeweils einer Teilmenge von lichtempfindlichen Elementen, beispielsweise in Zeilenform oder Spaltenform, darstellt, läuft somit über die gesamte Fläche der Sensoreinheit bis alle lichtempfindlichen Elemente der Sensoreinheit aktiviert worden sind. Erfindungsgemäß werden jedoch nur während des Soll-Aktivierungsintervalls Lichtsignale in den Überwachungsbereich ausgesandt und auch nur während dieses Soll-Aktivierungsintervalls diejenigen lichtempfindlichen Elemente aktiviert, von denen im störungsfreien Fall die durch die Lichtsignale im Überwachungsbereich erzeugten Lichtpunkte erfaßt werden.

Werden die Lichtpunkte von diesen lichtempfindlichen Elementen nicht erfaßt, so bedeutet dies, daß beispielsweise durch Eindringen eines Objekts in den Überwachungsbereich die Positionen der Lichtpunkte im Überwachungsbereich von ihren vorgegebenen Positionen abweichen, so daß eine entsprechende Verschiebung der auf der Sensoreinheit abgebildeten Lichtpunkte erfolgt. Beim Vergleich des von der Sensoreinheit erzeugten Bildes mit dem vorgegebenen Referenzbild wird in diesem Fall eine Abweichung erkannt, so daß ein Gegenstandsfeststellungssignal erzeugt wird.

In ähnlicher Weise kann das Referenzbild gerade die Anwesenheit eines erforderlichen oder zulässigen Objektes im Überwachungsbereich darstellen, so daß bei einer Abwesenheit dieses Objektes oder bei einer Anwesenheit eines nicht zulässigen Objektes im Überwachungsbereich eine Abweichung der Positionen der Lichtpunkte von ihren Soll-Positionen erfolgt, was wiederum eine entsprechende Abweichung der auf der Sensoreinheit abgebildeten Lichtpunkte zur Folge hat. Auch in diesem Fall wird somit durch einen Vergleich des vorgegebenen Referenzbildes mit dem von der Sensoreinheit aufgrund der erfaßten Lichtpunkte erzeugten Bildes ein Fehlersignal erzeugt.

Wird anstelle einer Sensoreinheit mit "Rolling Shutter" eine Sensoreinheit mit direkt adressierbarem Shutter verwendet, bei dem jeweils bestimmte Teilmengen von lichtempfindlichen Elementen, beispielsweise einzelne Zeilen oder einzelne Spalten oder auch eine bestimmte Menge von Zeilen oder Spalten, direkt aktiviert werden können, so wird nach einer weiteren Ausführungsform der Erfindung nur diese Teilmenge von lichtempfindlichen Elementen während des Aktivierungsintervalls aktiviert. Dies entspricht im wesentlichen der beschriebenen Anwendung beim Einsatz einer Sensoreinheit mit "Rolling Shutter", wobei lediglich der durch den "Rolling Shutter" bedingte Overhead, der durch das fortlaufende Aktivieren von Teilmengen der lichtempfindlichen Elemente außerhalb des Soll-Aktivierungsintervalls bedingt ist, vermieden wird.

Bevorzugt wird ein Gegenstands-Feststellungssignal erzeugt, wenn das erfaßte Bild von dem Referenzbild in seiner Form und/oder seiner Position um mehr als einen jeweils vorgegebenen Toleranzwert abweicht. Das Gegenstands-Feststellungssignal kann dabei, wie bereits beschrieben, sowohl ein positives Gegenstands-Feststellungssignal sein, d.h., daß das Eindringen eines Objektes in den Überwachungsbereich erkannt wird, oder es kann sich um ein negatives Gegenstands-Feststellungssignal handeln, das anzeigt, daß ein erforderliches Objekt im Überwachungsbereich nicht mehr vorhanden ist.

i Zur Erzeugung des Gegenstands-Feststellungssignal kann auch überprüft werden, ob die Position zumindest eines der erfaßten Lichtpunkte von seiner Referenzposition um mindestens einen vorgegebenen Toleranzwert abweicht.

Nach einer weiteren vorteilhaften Ausführungsform der Erfindung sind die lichtempfindlichen Elemente matrixförmig angeordnet und werden zeilenund/oder spaltenweise aktiviert. Je nach Anwendungsfall können die lichtempfindlichen Elemente jedoch auch in jeder sonstigen geeigneten geometrischen Form angeordnet sein, beispielsweise als konzentrische Kreise, in Trapezform für die Kantenerkennung usw.

Die Lichtsignale können gemäß der vorliegenden Erfindung sowohl im sichtbaren als auch im UV- oder im IR-Bereich liegen.

Vorteilhaft bilden die ausgesandten Lichtpunkte zumindest bereichsweise eine gerade Linie. Dabei ist die Sensoreinheit so angeordnet, daß die von den Lichtpunkten gebildete Linie bei einer matrixförmigen Ausbildung der Sensoreinheit in Zeilen- oder Spaltenrichtung der Matrix verlaufen.

Nach einer bevorzugen Ausführungsform der Erfindung umfaßt der Lichtsender mindestens eine Strahlformungsoptik, insbesondere ein diffraktives oder ein refraktives Element, zur Erzeugung der Lichtpunkte. Es ist jedoch auch möglich, daß der Lichtsender eine Scanvorrichtung, insbesondere mit einem Polygonspiegelrad, umfaßt, mit der ein die ausgesandten Lichtsignale bildender Lichtstrahl in dem Überwachungsbereich verschwenkbar ist. Durch Verwendung von pulsförmigen Lichtsignalen können auch auf diese Weise die erforderlichen Lichtpunkte in einer Linie erzeugt werden.

Selbstverständlich können die Lichtpunkte zur Bildung von mehren Linien oder von komplexeren geometrischen Figuren angeordnet sein. Das von der Sensoreinheit erzeugte Bild wird auch in diesen Fällen mit einem entsprechenden, abgespeicherten Referenzbild verglichen und bei entsprechender Abweichung wird ein Gegenstands-Feststellungssignal erzeugt.

Die Verwendung einer Strahlformungsoptik bzw. einer Scanvorrichtung zur Erzeugung der Vielzahl von Lichtpunkten ist vorteilhaft bezüglich der erforderlichen Augensicherheit. Darüber hinaus ist es beispielsweise auch möglich, mehrere Licht aussendende Elemente, insbesondere mehrere Laserdioden, vorzusehen, denen jeweils eine Strahlformungsoptik zugeordnet ist. Damit kann für jedes Licht aussendende Element eine Vielzahl von Lichtpunkten erzeugt werden, wobei gleichzeitig durch die unterschiedlichen Licht aussendenden Elemente vermieden wird, daß nicht alle Licht aussendenden Elemente gleichzeitig mit dem Auge fokussiert werden können.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnung näher erläutert; in dieser zeigen:
- Fig. 1: eine schematische Darstellung eines Überwachungsbereichs mit einer erfindungsgemäß ausgebildeten optoelektronischen Sensoranordnung,
- Fig. 2: den Überwachungsbereich nach Fig. 1 mit darin angeordnetem Objekt,
- Fig. 3: eine weitere Ausgestaltung eines Lichtsenders für eine optoelektronische Sensoranordnung gemäß der Erfindung,
- Fig. 4: eine Draufsicht auf eine schematisch dargestellte Sensoreinheit und
- Fig. 5: eine schematische Darstellung der ausgesandten Lichtsignale über die Zeit.

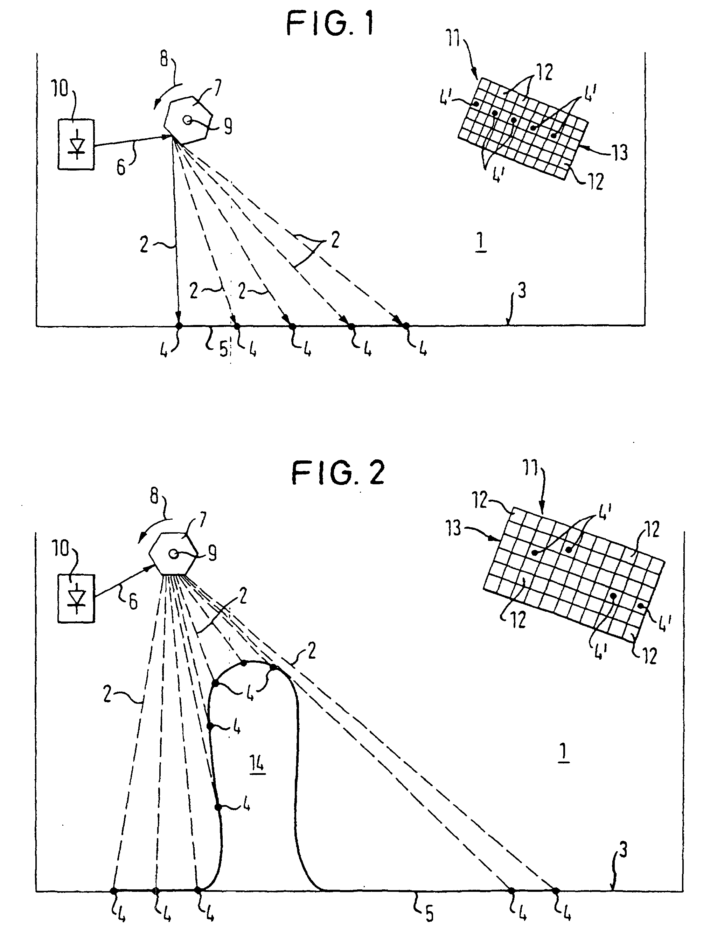

Fig. 1 zeigt einen Überwachungsbereich 1, in den Lichtstrahlen 2 so ausgesandt werden, daß am Boden 3 Lichtpunkte 4 abgebildet werden, die in einer Linie 5 angeordnet sind.

Die Lichtstrahlen 2 werden dabei durch Ablenkung eines Ausgangslichtsignals 6 an einem Polygonspiegelrad 7 erzeugt, das sich gemäß einem Pfeil 8 um seine Achse 9 dreht.

Das Ausgangslichtsignal 6 ist dabei pulsförmig ausgebildet und wird beispielsweise von einer Pülslaserdiode 10 oder einer gepulsteten CW-Laserdiode in Richtung des Polygonspiegelrades 7 ausgesandt.

Oberhalb des Überwachungsbereichs 1 ist eine ortsauflösende Sensoreinheit 11 angeordnet, die eine Vielzahl von in Zeilen und Spalten angeordneten lichtempfindlichen Elementen 12 umfaßt. Die Sensoreinheit 11 ist bezüglich des Überwachungsbereichs 1 und der durch die Laserdiode 10 und das Polygonspiegelrad 7 gebildete Lichtquelle ortsinvariant so angeordnet, daß die Lichtpunkte 4 als Lichtpunkte 4' in einer Zeile 13 der Sensoreinheit 11 abgebildet werden.

Fig. 2 zeigt die Anordnung nach Fig. 1 mit einem im Überwachungsbereich 1 angeordneten Objekt 14. Durch das Einbringen des Objektes 14 in den Überwachungsbereich 1 werden einige der Lichtpunkte 4 auf der Oberfläche des Objekts 14 abgebildet, so daß die durch die Lichtpunkte 4 definierte Linie 5 ihren Verlauf gemäß Fig. 2 ändert.

Dementsprechend ändern sich auch die Positionen der von der Sensoreinheit 11 erfaßten Lichtpunkte 4', wie es in Fig. 2 ebenfalls dargestellt ist.

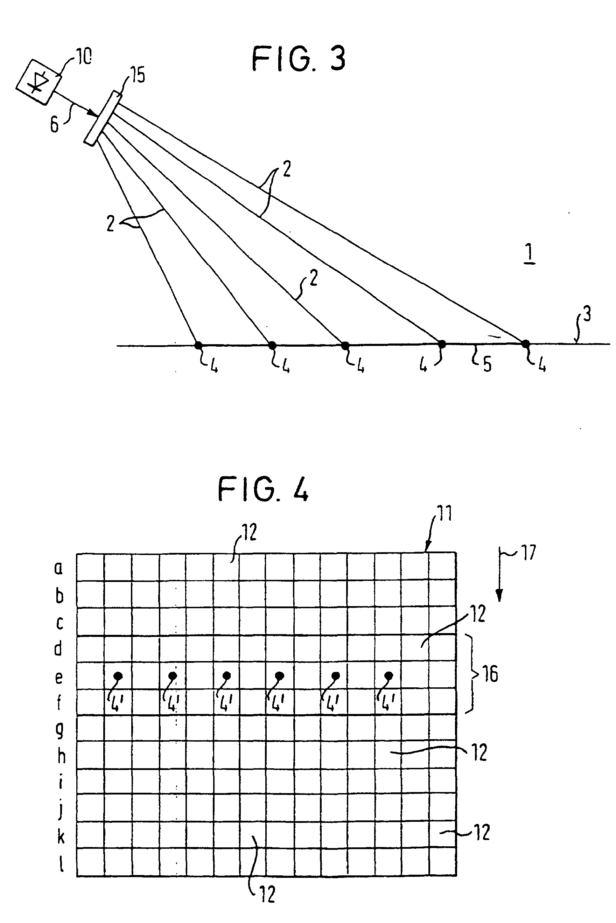

In Fig. 3 ist eine Ausführungsform der Erfindung dargestellt, bei der anstelle eines Polygonspiegelrades ein diffraktives optische Element 15 zur Erzeugung der Lichtpunkte 4 vorgesehen ist. Das diffraktive optische Element 15 bildet eine Strahlformungsoptik, mit der das von der Pulslaserdiode 10 ausgesandte Ausgangslichtsignal 6 in eine Vielzahl von Lichstrahlen 2 umgesetzt wird, so daß wiederum am Boden 3 des Überwachungsbereichs 1 eine Vielzahl von Lichtpunkten 4 abgebildet werden.

Während bei den Ausführungsbeispielen gemäß Fig. 1 und 2 somit die Lichtpunkte 4 zeitlich aufeinanderfolgend erzeugt werden, werden bei dem Ausführungsbeispiel gemäß Fig. 3 die Lichtpunkte 4 jeweils gleichzeitig erzeugt.

In Fig. 4 ist die Sensoreinheit 11 schematisch vergrößert dargestellt. Dabei sind die von den lichteinpfindlichen Elementen 12 der Sensoreinheit 11 gebildeten Zeilen mit a bis 1 bezeichnet.

Bei der Sensoreinheit 11 handelt es sich um einen Sensorchip mit sogenanntem "Rolling Shutter", d.h. daß während je eines Aktivierungsintervalls jeweils eine Teilmenge 16 der lichtempfindlichen Elemente 12 zur Integration von einfallendem Licht aktivierbar sind, wobei sich dieser Bereich der aktivierten lichtempfindlichen Elemente 12 üblicherweise von der ersten Zeilen a der Sensoreinheit 11 ausgehend in Richtung eines Pfeils 17 bis zur letzten Zeile 1 der Sensoreinheit 11 bewegt. Die Höhe dieses "Rolling Shutters", d.h. in vorliegendem Beispiel die Anzahl der Zeilen, die dabei in einem Aktivierungsintervalls jeweils gleichzeitig aktivierbar sind, kann dabei einstellbar sein und beträgt üblicherweise zwischen eins und fünf, bevorzugt drei Zeilen.

Im folgenden wird die Funktionsweise einer erfindungsgemäßen Vorrichtung sowie das erfindungsgemäße Verfahren anhand der Figuren 1 bis 4 näher beschrieben:

Vor Inbetriebnahme des erfindungsgemäßen Systems wird ein Referenzbild, d.h. die in Fig. 1 dargestellte Anordnung der Lichtpunkte 4' auf der Sensoreinheit 11 im störungsfreien Fall eingelernt. Die Sensoreinheit 11, die Pulslaserdiode 10 und das Polygonspiegelrad 7 bzw. die Strahlformungsoptik 15 werden dabei so ortsfest zueinander angeordnet, daß im fehlerfreien Fall die Lichtpunkte 4' ausschließlich innerhalb einer Zeile 13 der Sensoreinheit 11 zu liegen kommen.

Im Betriebszustand wird ausgehend von den Zeilen a, b und c jeweils eine Teilmenge der lichtempfindlichen Elemente 12 zum Empfangen von Licht aktiviert, wobei diese Teilmenge jeweils die lichtempfindlichen Elemente dreier aufeinanderfolgender Zeilen umfaßt, so daß ein "Rolling Shutter" mit einer Höhe von drei Zeilen verwendet wird. Die lichtempfindlichen Elemente 12 werden dabei jeweils während der Zeitdauer eines Aktivierungsintervalls für die Lichtaufnahme aktiviert.

Im nächsten Aktivierungsintervall wird das "Rolling Shutter" gemäß dem Pfeil 17 zu den nächsten drei Zeilen d, e, f der Sensoreinheit 11 verschoben, so daß die durch das Bezugszeichen 16 gekennzeichneten drei Reihen der Sensoreinheit 11 für den Lichtempfang aktiviert werden.

Da diese drei Reihen auch die Zeile e enthalten, die im Einlernvorgang als Positionszeile des Referenzbildes eingelernt wurde, wird synchron mit dem Aktivieren der lichtempfindlichen Elemente 12 in diesem Soll-Aktivierungsintervall von der Pulslaserdiode 10 das Lichtsignal 6 ausgesandt, so daß innerhalb des Soll-Aktivierungsintervalls die Lichtpunkte 4 erzeugt werden, die im fehlerfreien Fall gemäß Fig. 4 an ihre dargestellten Referenzpositionen als Abbilder 4' abgebildet werden.

Nach einem weiteren Verschieben des Rolling Shutters 16 in Richtung des Pfeils 17 werden im nächsten Aktivierungsintervall die lichtempfindlichen Elemente 12 der Zeilen g, h und i aktiviert und anschließend im nächsten Aktivierungsintervall die lichtempfindlichen Elemente 12 der Zeilen j, k und l.

Da ausschließlich während des Soll-Aktivierungsintervalls, in dem die lichtempfindlichen Elemente 12 der Zeilen d, e und f aktiviert wurden, das Lichtsignal 6 ausgesandt wurde, werden nach Aktivierung aller lichtempfindlichen Elemente 12 lediglich die Ausgangssignale der lichtempfindlichen Elemente 12 der Zeilen d, e und f ausgewertet. Dazu werden die Positionen der erfaßten Lichtpunkte 4' mit den in der Lernphase eingelernten Referenzpositionen verglichen und bei Abweichen einzelner Positionen um einen vorgegebenen Toleranzwert wird ein Gegenstand-Feststellungssignal erzeugt. Die Höhe des Rolling Shutters 16 wird dabei etwas größer als eine Zeile gewählt, um Abweichungen zu kompensieren, die beispielsweise durch Vibrationen oder ein Taumeln des Polygonspiegelrades erzeugt werden.

Grundsätzlich ist es auch möglich, bereits unmittelbar nach Beenden des Soll-Aktivierungsintervalls die Ausgangssignale der innerhalb des Soll-Aktivierungsintervalls aktivierten lichtempfindlichen Elemente 12 auszuwerten.

Sind die Lichtpunkte 4', wie in Fig. 2 dargestellt, gegenüber ihren Referenzpositionen verschoben, so werden bei einem Vergleich der abgespeicherten Referenzpositionen mit den Positionen tatsächlich während des Soll-Aktivierungsintervalls erfaßter Positionen aktivierter lichtempfindlicher Elemente 12 entsprechende Unterschiede auftreten, so das ein Gegenstand-Feststellungssignal erzeugt wird.

Steht eine Sensoreinheit 11 mit direkt adressierbarem Shutter zur Verfügung, d.h. bei dem beispielsweise die drei Zeilen d, e und f unmittelbar aktiviert werden können, ohne daß vorher die Aktivierung der Zeilen a, b und c erforderlich ist, so können jeweils synchron mit dem Aussenden des Lichtsignals 6 unmittelbar die lichtempfindlichen Elemente 12 der Zeilen d, e und f aktiviert werden. In diesem Fall bildet somit jedes Aktivierungsintervall ein Soll-Aktivierungsintervall.

Die Auswertung der erfaßten Lichtpunkte 4' erfolgt dann in analoger Weise wie bei der Auswertung einer Sensoreinheit mit Rolling Shutter.

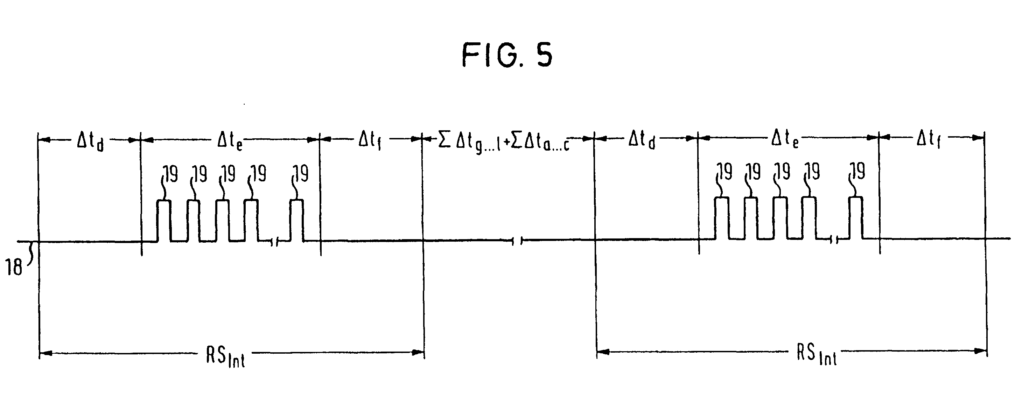

Aus Fig. 5 ist die Synchronisierung der Aussendung des pulsförmigen Lichtsignals 6 mit den Soll-Aktivierungsintervallen erkennbar. Dabei ist mit den Bezugszeichen 18 der Verlauf des ausgesandten Lichtsignals 6 bezeichnet, wobei mit RS_{Int} die Integrationszeit des Rolling Shutters dargestellt ist.

Während der Integrationszeit RS_{Int} werden die drei Zeilen d, e und f der Sensoreinheit 11 in aufeinanderfolgenden Intervallen Δt_{d}, Δtₑ und Δt_{f} aktiviert, wobei während des Intervalls Δtₑ von der Pulslaserdiode 10 eine Vielzahl von Pulsen 19 in den Überwachungsbereich ausgesandt werden, durch die die Lichtpunkte 4 gebildet werden. Die Integrationszeit RS_{Int} entspricht somit dem Soll-Aktivierungsintervall.

An das Soll-Aktivierungsintervall schließen sich weitere Aktivierungsintervalle für die nachfolgenden Zeilen g bis 1 und daran wiederum für die Zeilen a bis c an, während derer der Rolling Shutter zyklisch über die Sensoreinheit 11 läuft, wobei jeweils die entsprechenden lichtempfindlichen Elemente 12 der jeweiligen Zeilen aktiviert werden. Während dieser Aktivierungsintervalle erfolgt jedoch keine Aussendung eines Lichtsignals 6.

Erst mit Beginn des nächsten Intervalls Δt_{d} beginnt wieder ein Soll-Aktivierungsintervall und damit die Integrationszeit des Rolling Shutters, wobei wiederum während des Intervalls Δtₑ die Lichtimpulse 19 von der Laserdiode 10 ausgesandt werden.

Durch die Auswertung ausschließlich der Ausgangssignale der lichtempfindlichen Elemente der eingelernten Zeilen einschließlich eventueller Toleranzeilen wird somit die Integration von Fremdlicht deutlich verringert, so daß insgesamt die Fremdlichtempfindlichkeit gemäß dem erfindungsgemäßen Verfahren deutlich reduziert werden kann.

Während gemäß dem Ausführungsbeispiel der Rolling Shutter jeweils auf umlaufende Zeilen der Sensoreinheit bezogen wurde, ist grundsätzlich auch der Verlauf des Rolling Shutters entlang von Spalten oder anderer beliebiger geometrischer Anordnungen der lichtempfindlichen Elemente 12 auf der Sensoreinheit 11 möglich.

### Bezugszeichenliste

- 1.: Überwachungsbereich
- 2: Lichtstrahlen
- 3: Boden
- 4, 4': Lichtpunkte
- 5: Linie
- 6: Ausgangslichtsignal
- 7: Polygonspiegelrad
- 8: Pfeil
- 9: Achse
- 10: Pulslaserdiode
- 11: Sensoreinheit
- 12: lichtempfindliche Elemente
- 13: Zeilen
- 14: Objekt
- 15: diffraktives optisches Element
- 16: Teilmenge
- 17: Pfeil
- 18: Verlauf
- 19: Lichtpulse

## Patentansprüche

1. Verfahren zum Betreiben einer optoelektronischen Sensoranordnung, bei dem
- Lichtsignale in einen Überwachungsbereich ausgesandt werden zum Erzeugen einer aus Lichtpunkten bestehenden Linie im Überwachungsbereich,
- die in den Überwachungsbereich abgebildeten Lichtpunkte von einer ortsauflösenden Sensoreinheit mit einer Vielzahl von lichtempfindlichen Elementen erfaßt werden,
wobei
- jeweils nur eine Teilmenge der lichtempfindlichen Elemente der Sensoreinheit während jeweils eines von einer Vielzahl von aufeinanderfolgenden Aktivierungsintervallen zum Erfassen der Lichtpunkte aktiviert wird und
- jeweils das Aussenden der Lichtsignale synchron mit dem Aktivieren der lichtempfindlichen Elemente zumindest während eines Teils der Aktivierungsintervalle erfolgt, und
bei dem
- ein durch die erfaßten Lichtpunkte auf der Sensoreinheit erzeugtes Bild mit einem vorgegebenen Referenzbild verglichen wird.

2. Verfahren nach Anspruch 1,
**dadurch gekennzeichnet,**
**daß** die Position des erzeugten Bildes auf der Sensoreinheit mit einer vorgegebenen Referenzposition des Referenzbildes verglichen wird.

3. Verfahren nach Anspruch 1 oder 2,
**dadurch gekennzeichnet,**
**daß** die Positionen der erfaßten Lichtpunkte auf der Sensoreinheit mit vorgegebenen Referenzpositionen verglichen werden, insbesondere daß die Referenzpositionen der Lichtpunkte eingelernt werden.

4. Verfahren nach einem der vorhergehenden Ansprüche,
**dadurch gekennzeichnet,**
**daß** die Form und/oder die Referenzposition des Referenzbildes eingelernt wird.

5. Verfahren nach einem der vorhergehenden Ansprüche,
**dadurch gekennzeichnet,**
**daß** die Lichtsignale synchron mit dem Aktivierungsintervall ausgesandt werden, in dem die mit dem Referenzbild, insbesondere mit den Referenzpositionen des Referenzbildes oder der Lichtpunkte, korrespondierenden lichtempfindlichen Elemente der Sensoreinheit aktiviert werden.

6. Verfahren nach einem der vorhergehenden Ansprüche,
**dadurch gekennzeichnet,**
**daß** in aufeinanderfolgenden Aktivierungsintervallen nacheinander alle Teilmengen der lichtempfindlichen Elemente aktiviert werden, bis letztlich alle lichtempfindlichen Elemente der Sensoreinheit aktiviert worden sind:

7. Verfahren nach einem der vorhergehenden Ansprüche,
**dadurch gekennzeichnet,**
**daß** gezielt nur die Teilmenge der lichtempfindlichen Elemente aktiviert wird, in der die mit dem Referenzbild, insbesondere mit den Referenzpositionen des Referenzbildes oder der Lichtpunkte, korrespondierenden lichtempfindlichen Elemente der Sensoreinheit enthalten sind.

8. Verfahren nach einem der vorhergehenden Ansprüche,
**dadurch gekennzeichnet,**
**daß** ein Gegenstand-Feststellungssignal erzeugt wird, wenn das erfaßte Bild von dem Referenzbild in seiner Form und/oder seiner Position um mehr als jeweils vorgegebene Toleranzwerte abweicht.

9. Verfahren nach Anspruch 3 bis 8,
**dadurch gekennzeichnet,**
**daß** ein Gegenstand-Feststellungssignal erzeugt wird, wenn die Position zumindest eines der erfaßten Lichtpunkte von seiner Referenzposition um mindestens einen vorgegebenen Toleranzwert abweicht.

10. Verfahren nach einem der vorhergehenden Ansprüche,
**dadurch gekennzeichnet,**
**daß** die lichtempfindlichen Elemente matrixförmig angeordnet sind und zeilen- und/oder spaltenweise aktiviert werden und/oder
**daß** pulsförmige Lichtsignale verwendet werden und/oder
**daß** Lichtsignale im sichtbaren und/oder im UV- und/oder im IR-Bereich verwendet werden und/oder
**daß** die ausgesandten Lichtpunkte zumindest bereichsweise eine gerade Linie bilden.

11. Optoelektronische Sensoranordnung, insbesondere zum Durchführen des Verfahrens nach einem der vorhergehenden Ansprüche,
- mit einem Lichtsender (7, 10, 15) zum Aussenden von Lichtsignalen (6) in einen Oberwachungsbereich (1), die in dem Überwachungsbereich (1) eine aus Lichtpunkten (4) bestehende Linie (5) bilden,
- mit einer ortsauflösenden Sensoreinheit (11), die eine Vielzahl von lichtempfindlichen Elementen (12) zum Erfassen der in den Überwachungsbereich abgebildeten Lichtpunkte (4) umfaßt,
- mit einer Aktivierungseinheit, mit der jeweils eine Teilmenge (16) der lichtempfindlichen Elemente (12) der Sensoreinheit (11) während jeweils eines von einer Vielzahl von aufeinanderfolgenden Aktivierungsintervallen zum Erfassen der Lichtpunkte (4) aktivierbar ist,
- mit einer Synchronisierungseinheit, mit der jeweils das Aussenden der Lichtsignale (6) mit dem Aktivieren der lichtempfindlichen Elemente (12) zumindest während eines Teils der Aktivierungsintervalle synchronisierbar ist, und
- mit einer Vergleichseinheit zum Vergleichen eines durch die erfaßten Lichtpunkte (4') auf der Sensoreinheit (11) erzeugten Bildes mit einem vorgegebenen Referenzbild.

12. Optoelektronische Sensoranordnung nach Anspruch 11,
**dadurch gekennzeichnet,**
**daß** der Lichtsender (7, 10, 15) mindestens eine Strahlformungsoptik (15), insbesondere ein diffraktives oder ein refraktives Element, zur Erzeugung der Lichtpunkte (4) umfaßt.

13. Optoelektronische Sensoranordnung nach Anspruch 11 oder 12,
**dadurch gekennzeichnet,**
**daß** der Lichtsender (7, 10, 15) eines oder mehrere Licht (6) aussendende Elemente (10), insbesondere eine oder mehrere Laserdioden, umfaßt, insbesondere daß jedem Licht (6) aussendenden Element (10) eine Strahlformungsoptik (15) zu Erzeugung mehrerer Lichtpunkte (4) zugeordnet ist.

14. Optoelektronische Sensoranordnung nach Anspruch 11 bis 13,
**dadurch gekennzeichnet,**
**daß** der Lichtsender (7, 10, 15) eine Scanvorrichtung, insbesondere mit einem Polygonspiegelrad (7), umfaßt, mit der ein die ausgesandten Lichtsignale (6) bildender Lichtstrahl (2) in dem Überwachungsbereich (1) verschwenkbar ist.

## Claims

1. A method of operating an optoelectronic sensor arrangement,
wherein
- light signals are transmitted into a monitored zone to generate a line consisting of light dots in the monitored zone;
- the light dots imaged into the monitored zone are detected by a spatially resolving sensor unit having a plurality of light-sensitive elements;
wherein
- in each case, only a fraction of the light sensitive elements of the sensor unit are activated during a respective one of a plurality of succeeding activation intervals for the detection of the light spots; and
- the respective transmission of the light signals takes place synchronously with the activation of the light sensitive elements at least during some of the activation intervals; and
wherein
- an image generated on the sensor unit by the detected light spots is compared with a pre-determined reference image.

2. A method in accordance with claim 1, **characterised in that** the position of the generated image on the sensor unit is compared with a pre-determined reference position of the reference image.

3. A method in accordance with claim 1 or claim 2, **characterised in that** the positions of the detected light spots on the sensor unit are compared with pre-determined reference positions; in particular **in that** the reference positions of the light spots are learned.

4. A method in accordance with any one of the preceding claims, **characterised in that** the shape and/or the reference position of the reference image is/ are learned.

5. A method in accordance with any one of the preceding claims, **characterised in that** the light signals are transmitted synchronously with the activation interval in which the light sensitive elements of the sensor unit corresponding in particular to the reference positions of the reference image or of the light sports are activated.

6. A method in accordance with any one of the preceding claims, **characterised in that** all fractions of the light sensitive elements are successively activated in successive activation intervals until finally all light sensitive elements of the sensor unit have been activated.

7. A method in accordance with any one of the preceding claims, **characterised in that** only that fraction of the light sensitive elements is directly activated which includes the light sensitive elements of the sensor unit corresponding to the reference image, in particular to the reference positions of the reference image or of the light spots.

8. A method in accordance with any one of the preceding claims, **characterised in that** an object detection signal is generated when the detected image deviates in its shape and/or its position by more than respectively predetermined tolerance values from the reference image.

9. A method in accordance with claims 3 to 8, **characterised in that** an object detection signal is generated when the position of at least one of the detected light spots deviates from its reference position by at least one pre-determined tolerance value.

10. A method in accordance with any one of the preceding claims, **characterised in that** the light sensitive elements are arranged in matrix form and are activated line-wise and/or column-wise; and/or
**in that** pulsed light signals are used; and/or
**in that** light signals in the visible spectrum and/or in the UV spectrum and/or in the IR spectrum are used; and/or
**in that** the transmitted light spots form a straight line at least regionally.

11. An optoelectronic sensor arrangement, in particular for the carrying out of the method in accordance with any one of the preceding claims, comprising
- a light transmitter (7, 10, 15) for the transmission of light signals (6) into a monitored zone (1), said light signals forming a line (5) consisting of light spots (4) in the monitored zone (1);
- a spatially resolving sensor unit (11) which includes a plurality of light sensitive elements (12) for the detection of the light spots (4) imaged into the monitored zone;
- an activation unit with which a respective fraction (16) of the light sensitive elements (12) of the sensor unit (11) can be activated for the detection of the light spots (4) during a respective one of a plurality of successive activation intervals;
- a synchronising unit with which the respective transmission of the light signals (6) can be synchronised with the activation of the light sensitive elements (12) at least during some of the activation intervals; and
- a comparison unit for the comparing of an image generated by the detected light spots (4') on the sensor unit (11) with a predetermined reference image.

12. An optoelectronic sensor arrangement in accordance with claim 11, **characterised in that** the light transmitter (7, 10, 15) includes at least one optical beam shaping system (15), in particular a diffractive or a refractive element, for the generation of the light spots (4).

13. An optoelectronic sensor arrangement in accordance with claim 11 or claim 12, **characterised in that** the light transmitter (7, 10, 15) includes one or more light (6) transmitting elements (10), in particular one or more laser diodes; in particular **in that** an optical beam shaping system (15) for the generation of a plurality of light spots (4) is associated with each light (6) transmitting element (10).

14. An optoelectronic sensor arrangement in accordance with claim 11 to claim 13, **characterised in that** the light transmitter (7, 10, 15) includes a scanning apparatus, in particular having a polygon mirror wheel (7), and with which a light beam (2) forming the transmitted light signals (6) can be pivoted into the monitored zone (1).

## Revendications

1. Procédé pour actionner un dispositif de détecteur optoélectronique, dans lequel
- des signaux lumineux sont émis dans une zone de contrôle pour produire une ligne composée de points lumineux dans la zone de contrôle,
- les points lumineux reformés dans la zone de contrôle sont détectés par une unité de détecteur à résolution locale avec une pluralité d'éléments photosensibles,
sachant que
- à chaque fois seulement une quantité partielle des éléments photosensibles de l'unité de détecteur est activée pour la détection des points lumineux pendant respectivement un intervalle d'une pluralité d'intervalles d'activation successifs et
- à chaque fois l'émission des signaux lumineux a lieu de façon synchrone avec l'activation des éléments photosensibles au moins pendant une partie des intervalles d'activation, et
dans lequel
- une image produite sur l'unité de détecteur par les points lumineux détectés est comparée à une image de référence prédéfinie.

2. Procédé selon la revendication 1,
**caractérisé en ce que**,
la position de l'image produite sur l'unité de détecteur est comparée à une position de référence prédéfinie de l'image de référence.

3. Procédé selon la revendication 1 ou 2,
**caractérisé en ce que**,
les positions des points lumineux détectés sur l'unité de détecteur sont comparées aux positions de référence prédéfinies, en particulier **en ce que** les positions de référence des points lumineux sont révélées.

4. Procédé selon l'une des revendications précédentes,
**caractérisé en ce que**,
la forme et/ou la position de référence de l'image de référence est révélée.

5. Procédé selon l'une des revendications précédentes,
**caractérisé en ce que**,
les signaux lumineux sont émis de façon synchrone avec l'intervalle d'activation, au cours duquel sont activés les éléments photosensibles de l'unité de détecteur correspondant à l'image de référence, en particulier aux positions de référence de l'image de référence ou des points lumineux.

6. Procédé selon l'une des revendications précédentes,
**caractérisé en ce que**,
toutes les quantités partielles des éléments photosensibles sont activées successivement dans des intervalles d'activation successifs, jusqu'à ce que tous les éléments photosensibles de l'unité de détecteur soient activés.

7. Procédé selon l'une des revendications précédentes,
**caractérisé en ce que**,
seule la quantité partielle des éléments photosensibles est activée de façon ciblée, dans laquelle sont contenus les éléments photosensibles de l'unité de détecteur correspondants à l'image de référence, en particulier aux positions de référence de l'image de référence ou des points lumineux.

8. Procédé selon l'une des revendications précédentes,
**caractérisé en ce que**,
un signal de constatation d'objet est produit, lorsque l'image détectée dévie de l'image de référence au niveau de sa forme et/ou de sa position en dépassant les valeurs de tolérances respectivement définies.

9. Procédé selon les revendications 3 à 8,
**caractérisé en ce que**,
un signal de constatation d'objet est produit lorsque la position d'au moins un des points lumineux détectés dévie de sa position de référence d'au moins une valeur de tolérance prédéfinie.

10. Procédé selon l'une des revendications précédentes,
**caractérisé en ce que**,
les éléments photosensibles sont disposés en forme de matrice et sont activés par lignes et/ou par colonnes,
et/ou **en ce que** des signaux lumineux en forme d'impulsions sont utilisés,
et/ou **en ce que** des signaux lumineux sont utilisés dans la zone visible et/ou UV et/ou infrarouge,
et/ou **en ce que** les points lumineux émis forment une ligne droite au moins partiellement.

11. Dispositif de détecteur optoélectronique, en particulier pour la réalisation du procédé selon une des revendications précédentes,
- avec un émetteur lumineux (7, 10, 15) pour l'émission de signaux lumineux (6) dans une zone de contrôle (1), lesquels forment dans la zone de contrôle (1) une ligne (5) composée de points lumineux (4),
- avec une unité de détecteur (11) à résolution locale, comprenant une pluralité d'éléments (12) photosensibles pour la détection des points lumineux (4) représentés dans la zone de contrôle,
- avec une unité d'activation qui permet d'activer à chaque fois une quantité partielle (16) des éléments photosensibles (12) de l'unité de détecteur (11) pendant respectivement un intervalle d'une pluralité d'intervalles d'activation successifs pour la détection des points lumineux (4),
- avec une unité de synchronisation qui permet de synchroniser à chaque fois l'émission des signaux lumineux (6) avec l'activation des éléments photosensibles (12) au moins pendant une partie des intervalles d'activation, et
- avec une unité de comparaison pour la comparaison d'une image produite sur l'unité de détecteur (11) par les points lumineux (4') détectés à une image de référence prédéfinie.

12. Dispositif de détecteur optoélectronique selon la revendication 11,
**caractérisé en ce que**,
l'émetteur lumineux (7, 10, 15) comprend au moins une optique de formation de faisceau (15), plus particulièrement un élément diffractif ou réfractif, pour la production des points lumineux (4).

13. Dispositif de détecteur optoélectronique selon les revendications 11 ou 12,
**caractérisé en ce que**,
l'émetteur lumineux (7, 10, 15) comprend un ou plusieurs éléments (10) émettant de la lumière (6), en particulier une ou plusieurs diodes laser, plus particulièrement **en ce qu'**une optique de formation de faisceau (15) est attribuée pour la production de plusieurs points lumineux (4) à chaque élément (10) émettant de la lumière (6).

14. Dispositif de détecteur optoélectronique selon les revendications 11 à 13,
**caractérisé en ce que**,
l'émetteur lumineux (7, 10, 15) comprend un dispositif de balayage, en particulier un tambour à miroirs polygonal (7) qui permet d'orienter dans la zone de contrôle (1) un faisceau lumineux (2) formant les signaux lumineux (6) émis.
